# EUROPEAN PATENT APPLICATION

(11) **EP 1 674 889 A1**
(43) Date of publication of application: **28.06.2006**
(21) Application number: 05077946.1
(22) Date of filing: 20.12.2005
(51) Int. Cl.: G01W 1/10

(54) **Technique for creating, directing, storing and automatically delivering a message to an intended recipient based on climatic conditions**

(30) Priority: 23.12.2004 US 21288
(71) Applicant: FRANCE TELECOM, 75015 Paris (FR)
(72) Inventor: Orwant, J. L. c/o FTR&D Boston, MA 02142 Cambridge (US)
(74) Representative: Thach, Tum

(57) **Abstract**

A method and apparatus for identifying likely future locations of a person and transmitting notifications to the person about climatic conditions. More specifically, it relates to a technique for consulting sources of information about the object's motion in combination with weather forecasts to determine whether to transmit a message to the person with an alert about the forecast.

## Description

### Field of the Invention

The present invention relates generally to a method and apparatus for identifying likely future locations of a person and transmitting notifications to the person about climatic conditions. More specifically, it relates to a technique for consulting sources of information about the object's motion in combination with weather forecasts to determine whether to transmit a message to the person with an alert about the forecast.

### Background of the Invention

Knowing the weather at a specific future time is desirable for any one of numerous, well-known reasons. A number of techniques and resources are available for long-term forecasts of one day or more, such as from the U.S. National Weather Service (available at http://www.nws.noaa.gov) and many other sources woridwide. US patent 6,590,529 discloses a subsystem, responsive to weather data and location of an electronic device, which transmits to the electronic device weather forecast data specific to the current location of the electronic device. The system disclosed in this prior art is suitable when the location at the time for which the weather is forecasted is the same as the current location at which the forecast is asked. A problem arises for a future location that is different from the current location.

US patent 5,500,835 describes a weather-forecasting watch that provides information useful for a short-range weather forecast, but it does not take into account future motion by the wearer. US patent 6,498,987 describes a system and method for a personalized weather-forecasting system. It requires the user to specify a location of interest, thereby precluding situations in which the user is unable or unwilling to specify his location, and precludes situations in which the user does not know his location with certainty. Similarly, US patent 6,584,447 provides personalized weather reports, but only for a fixed location specified in advance.

The prior art is of limited value because it does not combine short-term predictors with information about the likely future locations of a person. This combination involves unique challenges involving the integration of two types of uncertain data (weather and motion of the individual).

### SUMMARY OF THE INVENTION

One aim of the present invention is to continuously obtain, at closely spaced time intervals, probability maps of a location of a person. A probability map is similar to a contour map, except that it shows the likelihood that a given person will be found in each location at a given time.

Another aim of the present invention is to continuously obtain, at closely spaced time intervals, weather forecasts for the locations likely to be visited by the person during the duration of the forecast.

A further aim of the present invention is to identify changes in weather likely to interest a person given his likely motion over the near future .

One other aim of the present invention is to transmit notification of such changes to the person.

These and other aims are attained in accordance with one aspect of the present invention directed to a technique for gathering information about the likely movement of a person based upon sources of information such as location-sensing devices (e.g. a GPS receiver) or calendar applications.

Another aspect of the present invention is directed to a technique for combining information about the likely movement of a person with precise weather forecasts, optionally using the velocity of the person to improve the efficiency of the combination.

Yet another aspect of the present invention is directed to a technique for identifying changes in weather likely to interest the person.

Still another aspect of the present invention is directed to a technique for transmitting notifications about changes in weather to the person.

### BRIEF DESCRIPTION THE DRAWINGS

Fig. 1 shows a schematic block diagram of components arranged for implementing the invention.

Fig. 2 depicts a flowchart illustrating operations performed by the system in accordance with the present invention.

Fig. 3 provides details of the LOCATE PERSON operation shown in Fig. 2.

Fig. 4 provides details of the LOCATE EVENTS operation shown in Fig. 2.

Fig. 5a provides details of the CONSTRUCT PROBABILITY MAP operation shown in Fig. 2.

Fig. 5b provides details of the MAP WITHOUT TIMESTAMPS operation shown in Fig. 5a.

Fig. 5c provides details of the MAP WITH TIMESTAMPS operation shown in Fig. 5a.

Fig. 5d provides details of the COMPUTE CHRONOLOGICALLY CONSISTENT PATHS operation shown in Fig. 5c.

Fig. 5e provides details of the COMPUTE PROBABILITY VECTOR operation shown in Fig. 5c.

Fig. 5f provides details of the COMPUTE PATH PROBABILITIES operation shown in Fig. 5c.

Fig. 5g provides details of the COMPUTE LOCATION PROBABILITIES operation shown in Fig. 5c.

Fig. 6 provides details of the RETRIEVE FORECASTS operation shown in Fig. 2.

Fig. 7 provides details of the RANK MESSAGES operation shown in Fig. 2.

### DETAILED DESCRIPTION OF THE DRAWINGS

Terms used in the explanation of the invention as presented herein are defined as follows. An event is an entry in a schedule or calendar file expressing a place where a person may be in the future. Geocoding is a process of translating a place address into its latitude and longitude. A location is a geographic position on the Earth's surface expressible as latitude and longitude. A probability map is a geographic map of locations with a probability assigned to each point corresponding to the likelihood that a given person will be within a given radius of the point at a given time.

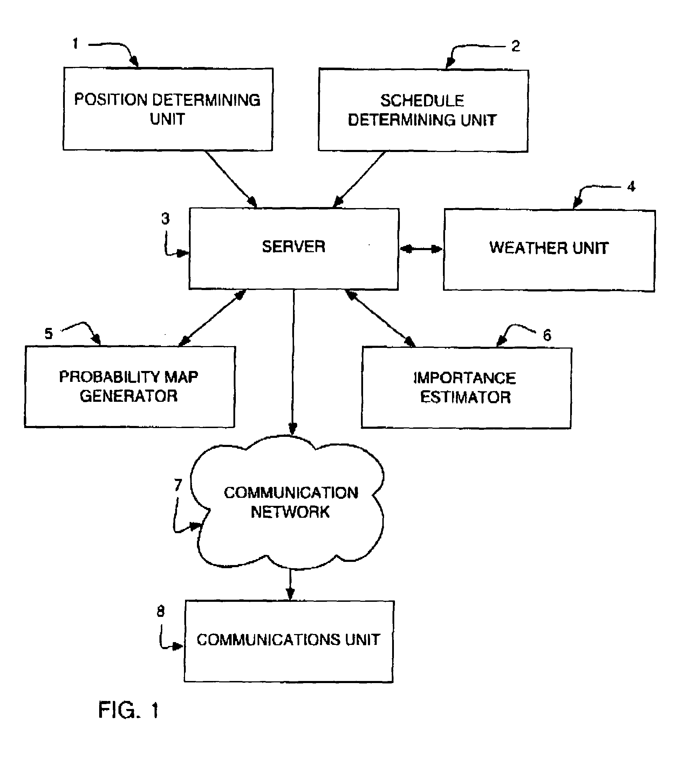

Fig. 1 shows an implementation of the invention wherein a system gathers data pertaining to a person's likely future location, performs inferences upon that data, combines those inferences with weather forecasts, ranks the importance of those forecasts to the person, and transmits certain of those forecasts to the person.

A server 3 is configured for receiving data about a current location and possible locations of a person respectively from a location determining unit 1 and a schedule determining unit 2. The server 3 is in relation on a one side with a probability map generator 5 provided for determining a likelihood for said person to be in any given location at a given time in a short-term future. The server 3 is in relation on another side with an importance estimator 6 in concert with a source of weather forecasts 4 provided for determining whether the person should be alerted to the expected weather conditions. The server 3 is configured for transmitting a message via a communication network 7 to a communications unit 8 in a case where the person should be alerted.

It should be understood that the number of communications units usable with this invention is a matter of design choice. The fact that just one communications unit is shown is done only for the sake of clarity in describing the invention. ln the ensuing description, only one communications unit will be discussed in detail, but it should be appreciated that such discussion applies to all communications units.

With purpose of gathering information about the current location of the person, the position determining unit 1 is hosted by a portable device (referred to below as "device") that can be placed, for example, inside a car or piece of luggage, or attached to a bicycle, or carried on one's person. The device includes well-known circuitry (not shown) to poll signals from a plurality of GPS satellites (not shown) and to determine there from the position of the device on the Earth's surface (which, of course, includes multi-story buildings, tall trees, and the like) and, by inference, the object's position as well. The position data generated by the device identifies its specific position (i.e., by latitude, longitude, and altitude) at a particular instant of time. The time data used in the invention (as detailed below) is generated by the device based on time information which is continuously transmitted by GPS satellites (and cell towers). The device also includes control circuitry (not shown) to automatically trigger at a pre-selected time interval the sequence of steps for detecting the GPS signals and for determining the device's position. Such pre-selected time interval is also a matter of design choice which trades off the resolution of the device's position as a function of time against the required data storage and battery life. The control circuitry can be designed to transmit the position data immediately to the server 3, or to store the position data for a predetermined number of positions and then to transmit the data for all such positions as part of a batch transmission. In the preferred embodiment, the device transmits a batch message over the air at periodic intervals to the server 3. The message is a digital encoding of a series of positions.

The portable device is for example a Nextel i88s or 195s mobile phone commercialized by Motorola in which the above-mentioned control circuit runs a software program implemented in the J2ME programming environment. This program polls the GPS satellites to determine the current position data by calculating the current latitude, longitude, and altitude of the object, and stores the position data locally (i.e., in the phone's memory). In accordance with the program, the device periodically relays the position data and the device's globally unique identifier, which was pre-stored therein, to a remote server via a communications network (not shown). More information on the nature of the transmission is set forth in co-pending, commonly-owned US patent application Serial No. 10/751,058 filed 12/31/03 and titled "TECHNIQUE FOR COLLECTING AND USING INFORMATION ABOUT THE GEOGRAPHIC POSITION OF A MOBILE OBJECT ON THE EARTHS SURFACE", the content of which is hereby incorporated by reference.

The schedule determining unit 2 comprises a Perl program that uses the Perl NetziCal module (available at http://search.cpan.org) to gather information about the likely future whereabouts of the person from a scheduling or calendar software application and extract specific locatable events from the schedule.

The server 3 is a computer running an operating system like the FreeBSD which provides control flow for system operation. After gathering position information from position determining unit 1 and scheduling information from schedule determining unit 2, it invokes the probability map generator 5 and importance estimator 6 to determine which requests to make to the weather unit 4.

The weather unit 4 is a system capable of providing short-range, geographically precise weather forecasts. It is for example a database collecting information from a weather data vendor like Météo France available on http://www.meteofrance.com/FR/mameteo/prevPays-jsp? or for the US like the national weather service available on http://www.nws.noaa.gov/

In a preferred embodiment, the probability map generator 5 is a Perl program that makes use of a commonly-available geocoding system. One preferred system is the Geocoder web service (available at http://geocoder.us). The importance estimator 6 is a Perl program, and the communication network 7 is a mobile phone network. The communications unit 8 is a mobile phone capable of receiving text messages such as the Nextel i88s.

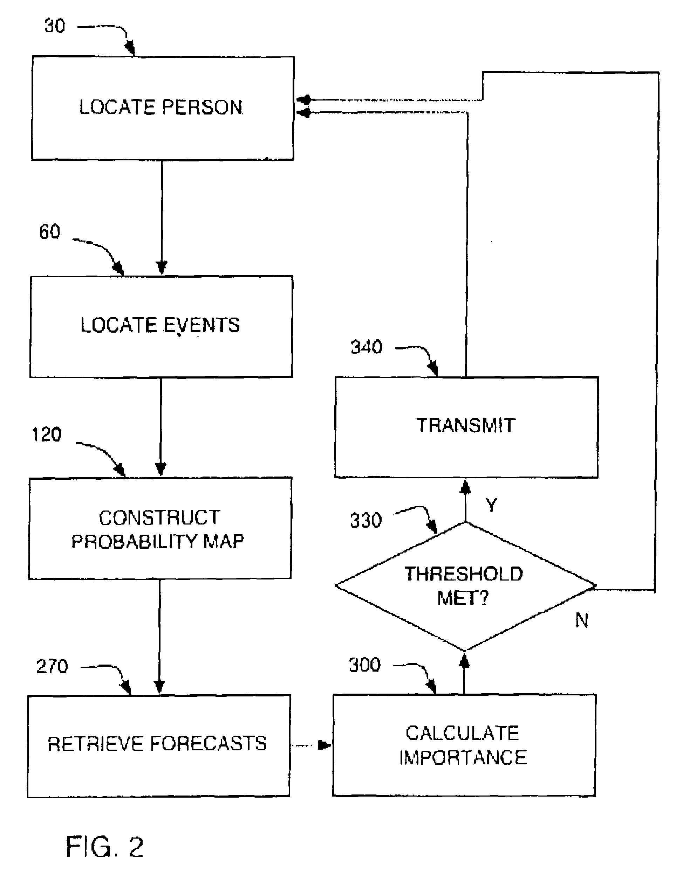

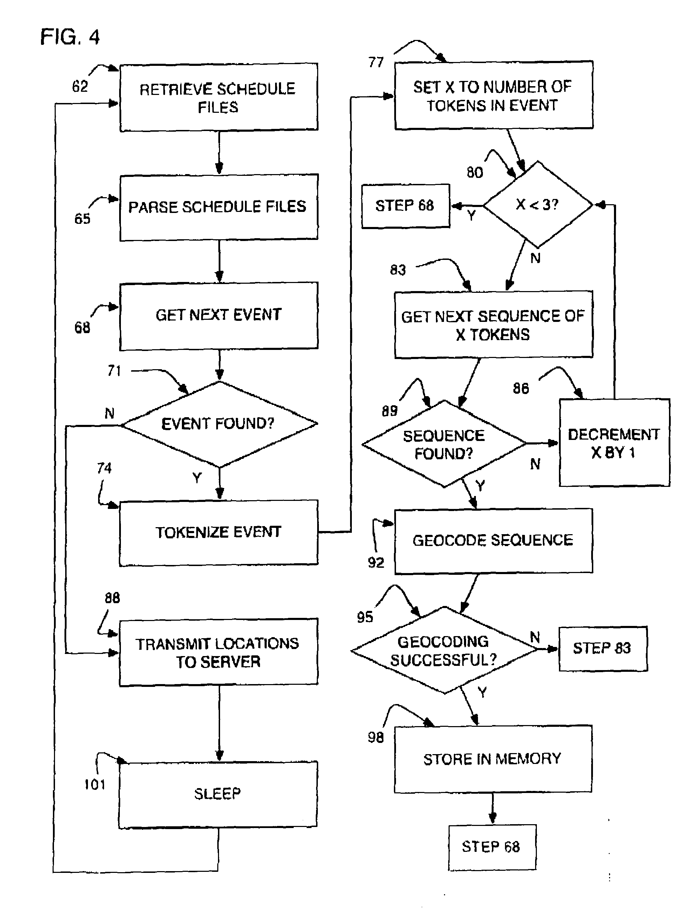

Fig. 2 is a flowchart which is useful for explaining the operations performed by the server 3 in accordance with the present invention The operation begins obtaining the location of the person, per step 30 by means of the position determining unit 1. The server then retrieves a schedule of upcoming events for the person per step 60 in the schedule determining unit 2. Upcoming events are then geocoded, i.e., translated to latitude and longitude, as later described in reference with figure 4. The server then uses the current location of the person in concert with the geocoded event locations to construct a probability map per step 120. The probability map identifies locations where the person is likely to be in the future. These locations are clustered into regions in time and space, and a weather forecast for each cluster is retrieved per step 270 from weather unit 4. Weather forecasts that are inclement or substantially different from the current weather conditions are identified in step 300, and forecasts that have a sufficiently high rank are identified in step 330 and transmitted to the person in step 340.

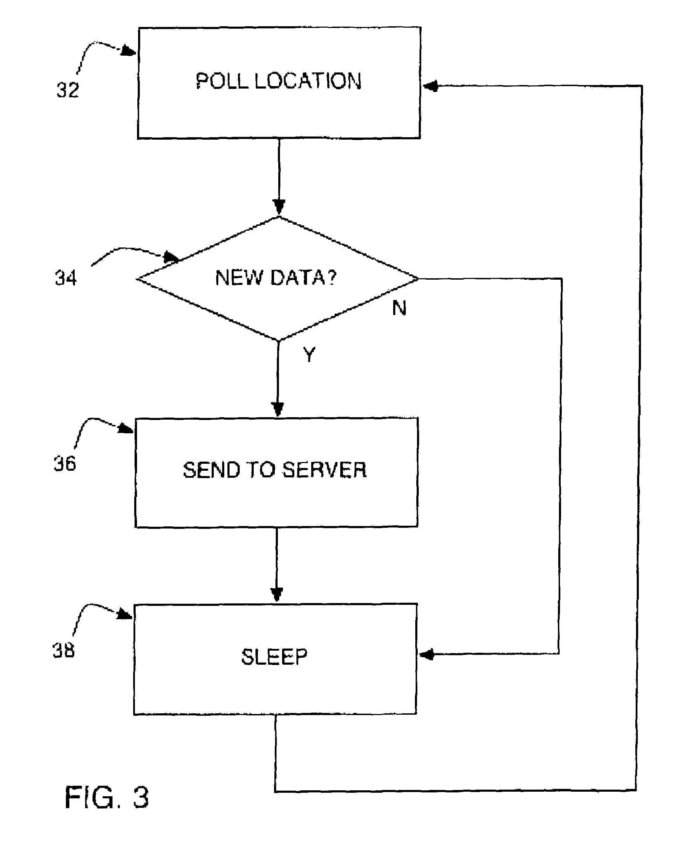

Fig. 3 shows how the "locate person" step 30 determines the person's location at regular time intervals. The duration of these intervals is a tunable parameter of the system and defaults to 60 seconds in the present invention. Per step 32, the position determining 1 unit polls GPS satellites, cell tower, or other source of location information. Any change in location is identified per step 34 and sent to the server per step 36. The position determining 1 then pauses for the remainder of the duration per step 38 and repeats the process.

Fig. 4 illustrates how the "locate events" step 60 determines the upcoming schedule of the person. The schedule files are retrieved per step 62 via the local file system or a communication network and stored locally in computer memory. The location of the files may be in either standard locations chosen by scheduling programs, or identified directly by the person via any standard technique such as a web page or a system configuration option. The schedule files, presumed to adhere to the Internet standard RFC 2445, are then parsed using the Net::iCal module per step 65 and separated in computer memory into distinct and possibly overlapping events. The earliest occurring event that has not already transpired or geocoded by the system is obtained per step 68. If there are no such events per step 71, locations corresponding to possibly found geocoded events are transmitted along with the results of the geocoding to the server per step 88, and the system waits for a fixed interval (defaulting to 60 seconds) per step 101 before repeating the process.

If an event is found in step 71, it is tokenized per step 74 by splitting up a string expressing the event into distinct words, each being a token, delineated by white space characters. Perfect tokenization is not necessary since the intent is not to identify semantic units, but merely to generate sequences of characters suitable for input to the geocoding routine in step 92.

A variable X is then set per step 77 to the number of tokens found in step 74 for the current event. If there are less than three tokens per step 80, no address can be found, and the system moves to the next event per step 68. If there are more than three tokens, attempts to find a geocodable address proceed. An internal pointer is set to the first token of the event, and the X tokens following the pointer are retrieved from the event per step 83. If the pointed token doesn't correspond to a token of a possible address, the token is removed from the sequence and the variable X is decremented by one per step 86 and step 80 is repeated with the new value of the variable X. if a sequence of tokens corresponding to an address is found per step 89, the token sequence is passed as a string to a geocoding utility per step 92- If the geocoding utility finds a valid latitude/longitude pair for the token sequence per step 95, it is stored in memory per step 98, and control passes to step 68 for the next event.

If the geocoding utility does not find a valid latitude/longitude pair, the pointer is advanced by one, and control returns to step 83 so that the next X tokens can be tested for a valid. address. This continues until the pointer reaches token number N - X + 2, where N is the total number of tokens in the event. At this point, no sequence will be found per step 89. X is then decremented by 1, and control passes to step 80.

The net effect of steps 77 through 95 is to ensure that any address in the event will be found; that longer and more complete addresses are found before shorter or incomplete addresses; and that if multiple addresses appear in the event, the address occurring first is the one geocoded. By examining the entire event and sequentially removing tokens from the end of the event, the longest and earliest event is guaranteed to be found.

The search for geocodable addresses proceeds for every event. Once all events have been searched per step 71, the events for which geocoded addresses are found are transmitted along with the results of the geocoding to the server per step 88, and as described above the system waits for a fixed interval per step 101 before again attempting to locate events in the event that the schedule files have been updated.

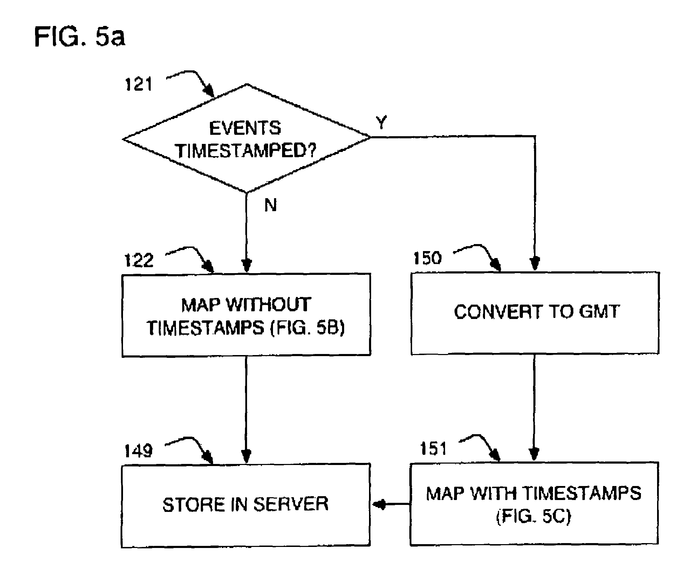

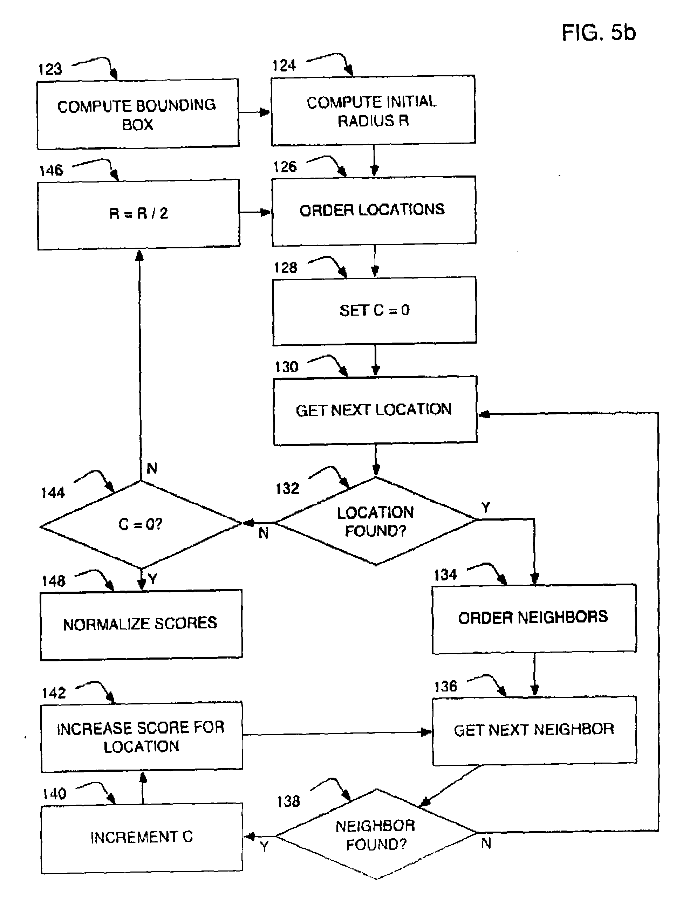

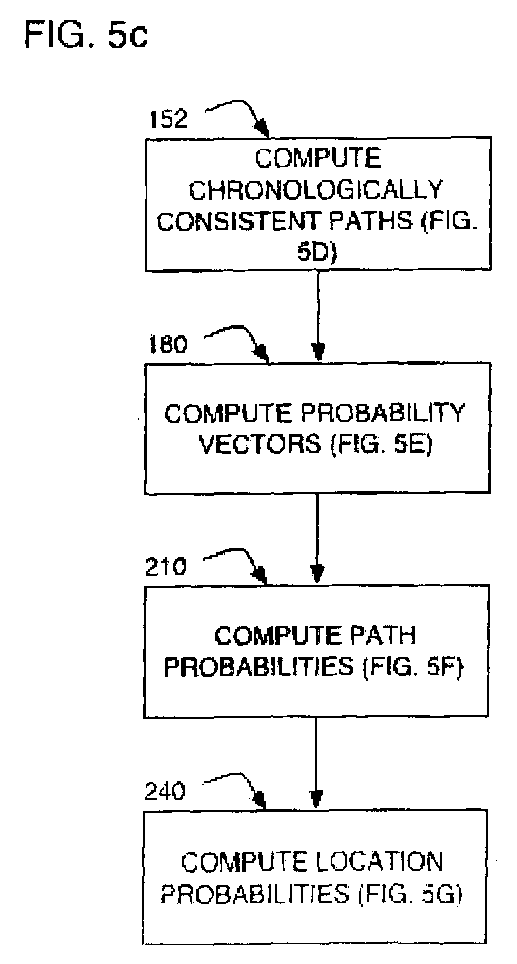

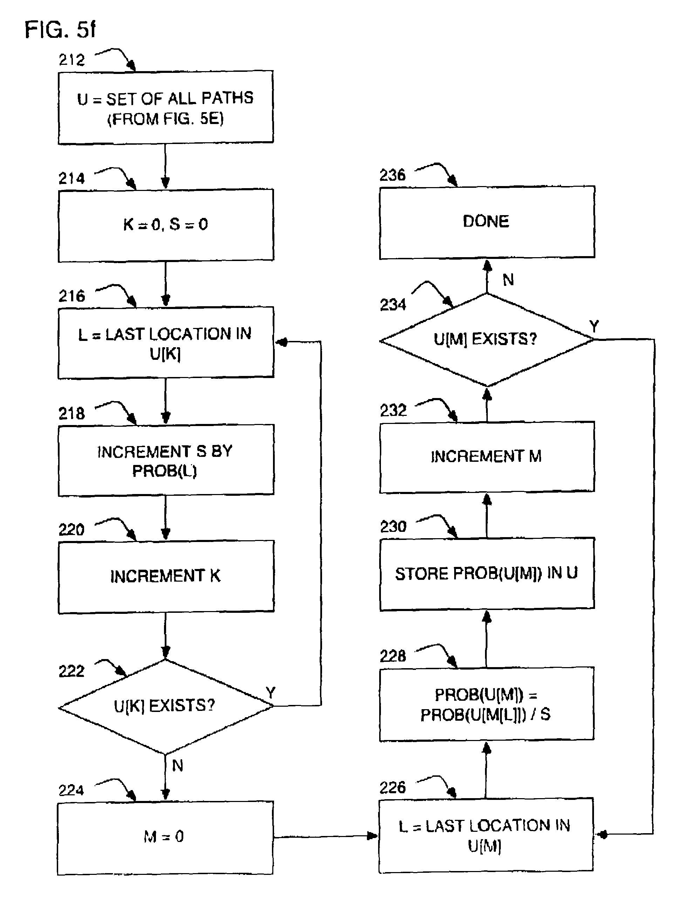

As shown in Figs. 5a through 5g, the events for which geocoded addresses exist are used to compute a probability map for the person. Fig. 5a shows the overall procedure for computing the probability map. If the events do not include times per step 121, a probability map is constructed using only the distances between the points per step 122 and detailed in Fig. 5b. If the events do include times, all times are converted to Greenwich Mean Time per step 150 using the latitude and longitude computed during the geocoding process and using an automated service for converting latitude and longitude to time zone such as http://www.csgnet work.com/sunriscset html. The probability map is then constructed per step 151 and detailed in Fig. 5c. The map resulting from step 122 or from step 150 is then stored in the server 3 per step 149.

Fig. 5b shows the procedure for computing a probability map in the absence of timestamps. Per step 123, a bounding box is first computed by iterating through all of the locations and finding the minimum and maximum latitude, and the minimum and maximum longitude. The bounding box is then defined as a region spanning the rectangle defined by these four coordinates.

An initial radius R is set equal to the length of the diagonal of this rectangle per step 124. A score assigned to each location is set to zero. The locations in the rectangle are then placed in a queue per step 116; the precise ordering is unimportant. A counter C is set to zero per step 128, and the first location is extracted from the queue per step 130. Presuming there was still a location in the queue per step 132, all other locations occurring within distance R are ordered into a second queue per step 134. These are called neighbors. The first neighbor is removed from the second queue per step 136. Presuming such a neighbor exists, C is incremented by one per step 140, and the score for the location is increased by 1 divided hy the squared distance from the location to the neighbor per step 142. This process of finding neighbors and increasing the score for the location continues until no neighbors remain in second queue, per step 138. At that time, steps 132 through 142 are repeated for the next location until no locations remain per step 132. At that time, C is tested to see whether it is equal to zero per step 144. lf any neighbors were found for any location, C will be greater than zero, and R will be halved per step 146. Steps 126 through 144 are then repeated for this new, smaller radius. Eventually, the radius will decrease to a value at which no neighbors are found for any location. When this occurs, C will be zero per step 144, and the score for each location is normalized by dividing by the sum of all scores. The result is a probability for each location.

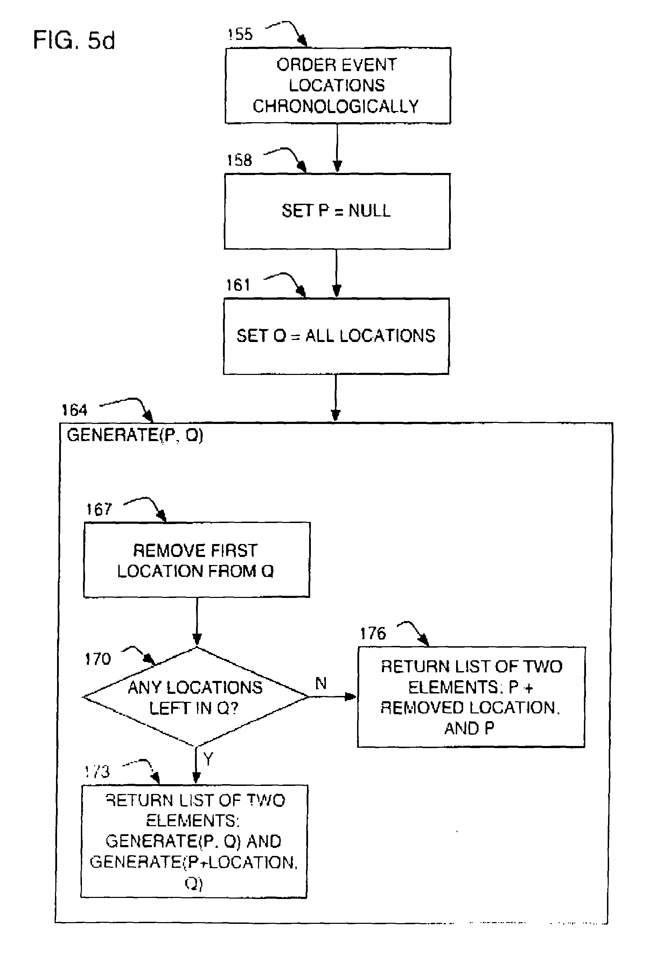

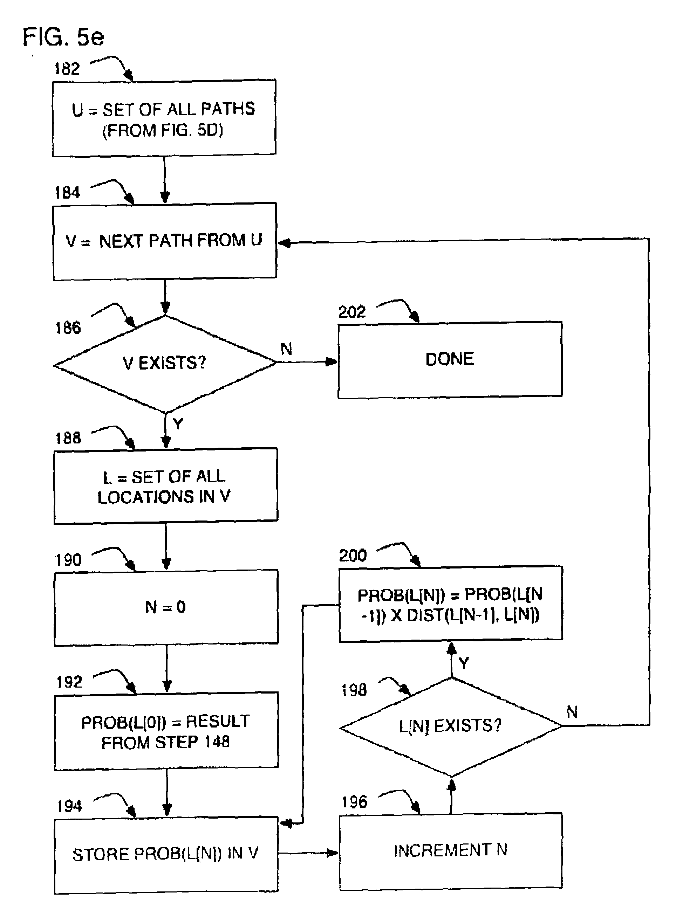

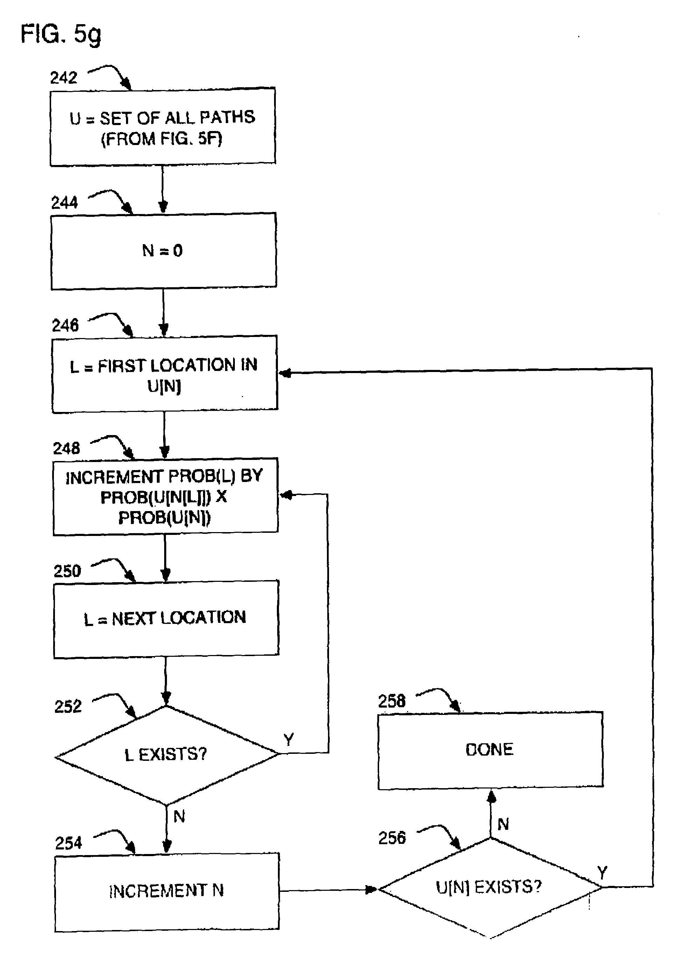

Fig. 5c shows the high-level procedure for computing a probability map when timestamps are present. Per step 152, the set of all chronologically consistent paths from event to event are computed. For each such path, a sequence of probabilities called a probability vector is computed per step 180 and illustrated in Fig. 5e. Each element of the probability vector corresponds to a location, and expresses the likelihood that the person will be at that location at its stated time given that the enclosing path is correct. Step 210, illustrated in Fig. 5f, computes the likelihood of each path, and stop 240, illustrated in Fig. 5g, combines the results from steps 180 and 210 to calculate an overall probability for each event. Figs. 5d, 5e, 5f, and 5g explain these processes in more detail.

Fig. 5d shows the procedure for computing chronologically consistent paths per step 152. First, the locations are sorted into chronological order by any standard sorting routine and placed in a queue per step 155. A list variable P is then set to an empty list per step 158, and per step 161 a second list variable Q is set to the queue generated by step 155. At this point, a recursive function GENERATE is called with the two parameters P and Q per step 164.

The GENERATE function removes the first location from the second list variable Q per step 167. If that was the only location per step 170, GENERATE returns a list of two elements per step 176. The first element is a list of the locations in P, and the second element is a list of the locations in P with the removed location appended. If there was more than one location passed to GENERATE as the list Q, then per step 173 GENERATE returns a list of two elements. The first element of the list is the result of calling GENERATE with two parameters: P, and the newly shortened Q. The second element of the list is the result of calling GENERATE with two parameters: a new P that appends the location removed from Q, and the newly shortened Q. The result of the initial call to GENERATE is thus the set of all possible chronologically consistent paths.

Fig. 5e shows the procedure for computing probability vectors per step 180. First, the set of paths generated by step 152 is assigned to a list U, per step 182. The order of the paths in U is unimportant. In step 184, the first path is removed from U and called V. Presuming the path V exists, per step 186, a second list L is set to all of the locations in V, per step 188. A scalar variable J is then set to zero. signaling a first location in the list L, per step 190, and the probability calculated in step 148 is assigned to that first location L[0] per step 192. That probability is stored per step 194 in a path data structure associated with the path V. The variable J is incremented by one per step 196. If location J exists per step 198, then the probability of that location is set to the probability of the previous location L[J-1] multiplied by a distance metric DIST per step 200. In the preferred embodiment, DIST(L[J-1], L[J]) is equal to the square of the difference between the times of the locations divided by the distance between the locations. In other words, DIST(L[J-1], L[J]) is the mulplicative inverse of the velocity squared. This corresponds to the common sense insight that the faster the person needs to move to get from one location to the next, the less likely it is that the motion occurs.

Steps 200, 194 and 196 are repeated until the end of the path is reached as detected per step 198. Then the process of steps 184-200 is repeated for the next path. When no paths remain, the V EXISTS? test will fail per step 186, and per step 202 control will pass to step 210 as shown in Fig. 5c. At this point all probability vectors have been computed and stored in the path data structures.

Fig. 5f shows the procedure for computing path probabilities per step 210. First, per step 212, a list variable U is defined as the set of all paths from step 152 together with the probability vectors calculated in step 180. Then a scalar variable K, used for iterating through the paths in U, and a scalar variable S are set to zero per step 214. L is then set to the final chronological location in path number K per step 216, and the scalar variable S is incremented by the probability of that location in that path per step 218. That probability was previously calculated in step 180. Next, K is incremented by one per step 220. Presuming any paths remain in U, the path U[K] will exist per step 222, and steps 216 through 222 will repeat. When no paths remain in U, S will contain the sum of all the probabilities of final locations in all paths, and control will pass from step 222 to step 224.

Once the sums of all probabilities of final locations has been calculated, a scalar variable M, used for iterating through the paths in U, is set to zero per step 224. L is set to the last location in path U[M] per step 226, and in step 228 the probability for the overall path U[M] is defined as the probability of the last location in the path divided by S, previously calculated and stored during steps 216 through 222. The overall path probability is stored in U per step 230. M is then incremented by one per step 232, and the process of steps 226 through 232 is repeated until no paths remain, per step 234. Per step 236, control then passes back to step 240.

Fig. 5g shows the procedure for computing overall location probabilities per step 240. Per step 242, U is defined to be the set of all paths generated in step 152 and augmented in steps 180 and 210. A scalar variable H, used for iterating through the paths in U, is set to zero per step 244. ln step 246, L[J] is set to the first location in U[H], and a path-independent probability of location from L, initially set at zero, is incremented by the probability PROB(L[J]) of location L[J] in path U[H] calculated in step 180 multiplied by the overall path probability of U[H] calculated in step 210.

The location is then advanced to the next location L[J+1] in U[H] per step 250. Per step 252, steps 248 and 250 are repeated until no locations remain in path U[H]. H is then incremented by one per step 254, and in step 256 presuming path U[H] exists, steps 246 through 254 are repeated. When no paths remain, then the path-independent probabilities for every location will have been computed, and the procedure finishes per step 258.

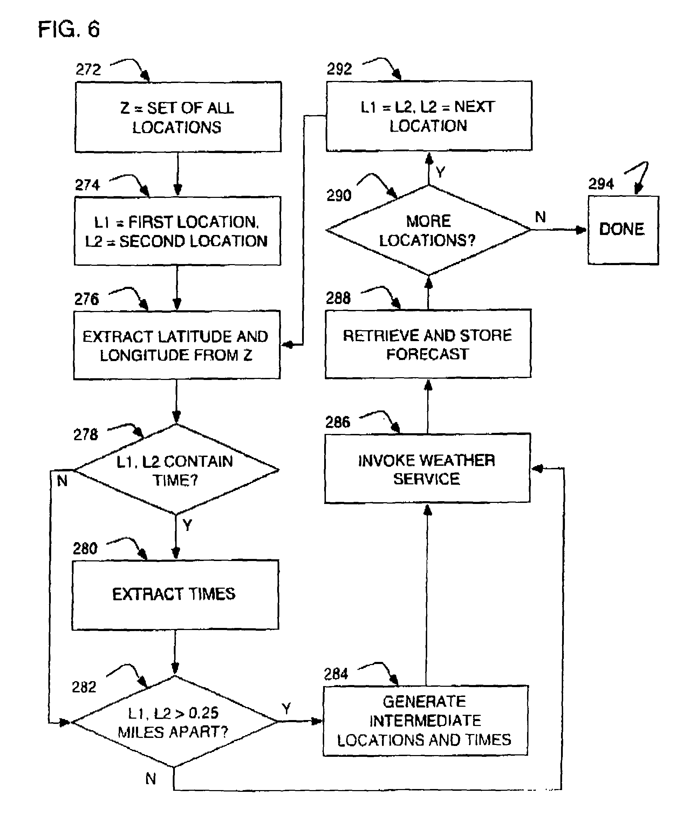

As shown in Fig. 6, the "retrieve forecasts" step 270 uses the external weather forecasting service to obtain weather forecasts for the event locations. Initially, the list variable Z is defined to be the set of all locations, per step 272. L1 is then set to the user's current location, and L2 is set to the first location in the schedule per step 274, and the latitude and longitude of L1 and L2 are extracted from the location data structure Z per step 276. The order of the locations does not matter; in the present invention, they are ordered by the sequence provided by the schedule determining unit 2.

If the location data structures contain timestamps per step 278, they are extracted from L1 and L2 per step 280. lf the locations L1 and L2 are more than a minimum distance apart (0.25 miles by default) per step 282, weather forecasts for the locations in between may be desired even though they do not correspond to specific events in the person's schedule. These locations are generated in step 284 at equally spaced intervals between L1 and L2. If timestamps were found in step 278, they are used to generate timestamps for the intermediate locations, using an equally spaced interval beginning with the starting time of L1 and ending with the finishing time of L2.

The weather service, which is presumed to be available over a communications network (not shown) or resides locally on the server, is sent requests for L1, L2, and any intermediate locations generated per step 286. lf the locations L1 and L2 are less than or equal to the minimum distance apart as detected per step 282, step 284 is shunted for activation of step 286. If timestamps were extracted in step 278, they are passed to the weather service as well, to improve the precision of the forecasts. The results of the request are retrieved and stored locally per step 288. If L2 is the last location as detected by step 290, the operation completes per step 294. If L2 is not the last location, L1 is set to L2, L2 is set to the next location per step 292, and steps 276 through 290 repeat. In this way, forecasts are generated for every contiguous pair of locations.

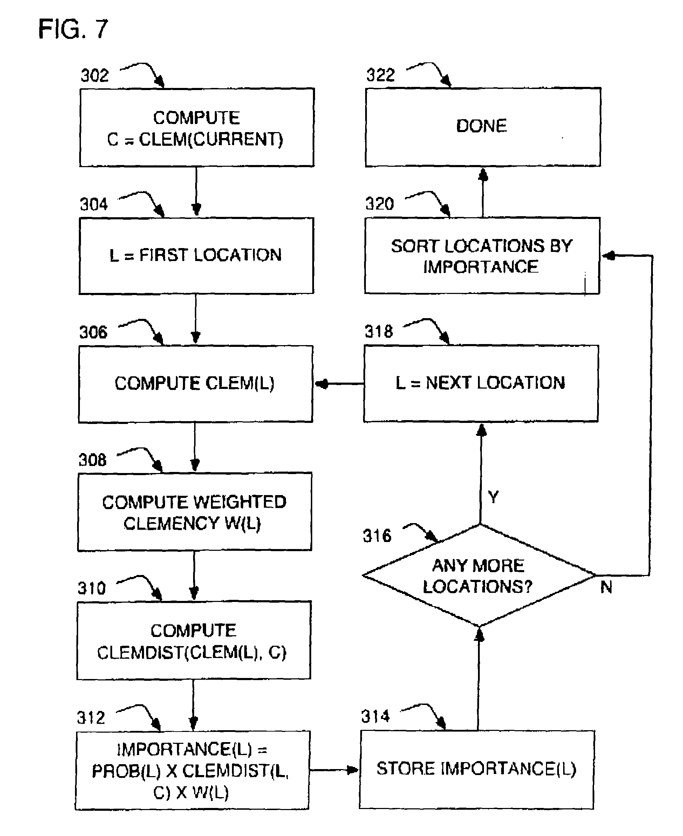

As shown in Fig. 7, the forecasts are ranked in order of importance. Four factors contribute to the importance of a forecast at a given location: the change in the weather, the inclemency of the weather, the likelihood of the forecast accuracy, and the probability of the person being present at the location. In step 302, a clemency C is computed for the current location of the person. The clemency function CLEM returns a number between 0 and 1 expressing the weather conditions, with 0 indicating ideal conditions (e.g., sunny, no clouds, 24 degrees Celsius) and 1 indicating weather conditions of a nature that mandates evacuation of the affected area. There are many ways to define CLEM, and the present invention does not impose any constraints on its definition. Some uses (e.g., for irrigation or warfare) might use a clemency function very different from conventionally agreed-upon ideals of desirable weather.

The variable I. is then set to the first location per step 304, and its clemency CLEM(L) computed using the weather forecast gathered in step 270, per step 306, The order of the locations docs not matter, since the importance is calculated for all of them; "first location" is merely a way of indicating the initial choice of location, whatever it might be. In the present invention, the locations are chosen in the order provided by the schedule determining unit, but this is a matter of convenience only. Per step 308, a weighted clemency W(L) is computed by multiplying the clemency CLEM(L) by the probability provided by the weather forecast in step 270 if it exists, and one otherwise.

A distance metric CLEMDIST is used to calculate the disparity in weather conditions between CLEM(L) and C, per step 310. Many different choices are possible for CLEMDIST. The present invention uses one plus the square of the difference between CLEM(L) and C, yielding a number between one and two.

Per step 312, the importance of the forecast for location L is then calculated as the product of the probability that the person visits the location (calculated in step 120) multiplied by the difference in weather conditions as defined by CLEMDIST(CLEM(L), C) multiplied by the weighted clemency of location L. This importance value is then stored in the location data structure per step 314. lf L was not the last location per step 316, L is set to the next location per step 318 and steps 306 through 316 are repeated for the new L. If L was the last location per step 316, the locations are sorted in order of decreasing importance using a standard sorting method per step 320. The procedure is now done per step 322, as the forecasts are ready for transmission.

Returning to Fig. 2, the ranked forecasts are then compared to a threshold (defaulting to 0.37) in step 330. Any forecasts exceeding that threshold are transmitted to the person per step 340, using an appropriate means of notification such as pager, electronic mail, or mobile phone short message service.

Although a preferred embodiment of the present invention has been described above in detail, various modifications thereto will be readily apparent to anyone with ordinary skill in the art. For example, the present invention may be implemented either in hardware or software, or a combination of both. Also, the messages may be translated into other languages, expressed in a multitude of forms, and transcoded to other media such as speech, images, or video. Further, the locations for which forecasts are obtained may come from sources other than a calendar or schedule application.

Terms used in the explanation of the invention as presented herein are defined as follows. An event is an entry in a schedule or calendar file expressing a place where a person may be in the future. Geocoding is a process of translating a place address into its latitude and longitude. A location is a geographic position on the Earth's surface expressible as latitude and longitude. A probability map is a geographic map of locations with a probability assigned to each point corresponding to the likelihood that a given person will be within a given radius of the point at a given time.

Fig. 1 shows an implementation of the invention wherein a system gathers data pertaining to a person's likely future location, performs inferences upon that data, combines those inferences with weather forecasts, ranks the importance of those forecasts to the person, and transmits certain of those forecasts to the person.

A server 3 is configured for receiving data about a current location and possible locations of a person respectively from a location determining unit 1 and a schedule determining unit 2. The server 3 is in relation on a one side with a probability map generator 5 provided for determining a likelihood for said person to be in any given location at a given time in a short-term future. The server 3 is in relation on another side with an importance estimator 6 in concert with a source of weather forecasts 4 provided for determining whether the person should be alerted to the expected weather conditions. The server 3 is configured for transmitting a message via a communication network 7 to a communications unit 8 in a case where the person should be alerted.

It should be understood that the number of communications units usable with this invention is a matter of design choice. The fact that just one communications unit is shown is done only for the sake of clarity in describing the invention. In the ensuing description, only one communications unit will be discussed in detail, but it should be appreciated that such discussion applies to all communications units.

With purpose of gathering information about the current location of the person, the position determining unit 1 is hosted by a portable device (referred to below as "device") that can be placed, for example, inside a car or piece of luggage, or attached to a bicycle, or carried on one's person. The device includes well-known circuitry (not shown) to poll signals from a plurality of GPS satellites (not shown) and to determine there from the position of the device on the Earth's surface (which, of course, includes multi-story buildings, tall trees, and the like) and, by inference, the object's position as well. The position data generated by the device identifies its specific position (i.e., by latitude, longitude, and altitude) at a particular instant of time. The time data used in the invention (as detailed below) is generated by the device based on time information which is continuously transmitted by GPS satellites (and cell towers). The device also includes control circuitry (not shown) to automatically trigger at a pre-selected time interval the sequence of steps for detecting the GPS signals and for determining the device's position. Such pre-selected time interval is also a matter of design choice which trades off the resolution of the device's position as a function of time against the required data storage and battery life. The control circuitry can be designed to transmit the position data immediately to the server 3, or to store the position data for a predetermined number of positions and then to transmit the data for all such positions as part of a batch transmission. In the preferred embodiment, the device transmits a batch message over the air at periodic intervals to the server 3. The message is a digital encoding of a series of positions.

The portable device is for example a Nextel i88s or i95s mobile phone commercialized by Motorola in which the above-mentioned control circuit runs a software program implemented in the J2ME programming environment. This program polls the GPS satellites to determine the current position data by calculating the current latitude, longitude, and altitude of the object, and stores the position data locally (i.e., in the phone's memory). In accordance with the program, the device periodically relays the position data and the device's globally unique identifier, which was pre-stored therein, to a remote server via a communications network (not shown) More information on the nature of the transmission is set forth in co-pending, cornmonly-owned US patent application Serial No. 10/751,058 filed 12/31/03 and titled **"TECHNIQUE FOR COLLECTING AND USING INFORMATION ABOUT THE GEOGRAPHIC POSITION OF A MOBILE OBJECT ON THE EARTH'S SURFACE"**, the content of which is hereby incorporated by reference.

The schedule determining unit 2 comprises a Perl program that uses the Perl Net::iCal module (available at http://search.cpan.org) to gather information about the likely future whereabouts of the person from a scheduling or calendar software application and extract specific locatable events from the schedule.

The server 3 is a computer running an operating system like the FreeBSD which provides control flow for system operation. After gathering position information from position determining unit 1 and scheduling information from schedule determining unit 2, it invokes the probability map generator 5 and importance estimator 6 to determine which requests to make to the weather unit 4.

The weather unit 4 is a system capable of providing short-range, geographically precise weather forecasts. It is for example a database collecting information from a weather data vendor like Météo France available on http://www.meteofrance.com/FR/mameteo/prevPays.jsp? or for the US like the national weather service available on http://www.nws.noaa.gov/.

In a preferred embodiment, the probability map generator 5 is a Perl program that makes use of a commonly-available geocoding system. One preferred system is the Geocoder web service (available at http//geocoder.us)*.* The importance estimator 6 is a Perl program, and the communication network 7 is a mobile phone network. The communications unit 8 is a mobile phone capable of receiving text messages such as the Nextel i88s.

Fig. 2 is a flowchart which is useful for explaining the operations performed by the server 3 in accordance with the present invention. The operation begins obtaining the location of the person, per step 30 by means of the position determining unit 1. The server then retrieves a schedule of upcoming events for the person per step 60 in the schedule determining unit 2. Upcoming events are then geocoded, i.e., translated to latitude and longitude, as later described in reference with figure 4. The server then uses the current location of the person in concert with the geocoded event locations to construct a probability map per step 120. The probability map identifies locations where the person is likely to be in the future. These locations are clustered into regions in time and space, and a weather forecast for each cluster is retrieved per step 270 from weather unit 4. Weather forecasts that are inclement or substantially different from the current weather conditions are identified in step 300, and forecasts that have a sufficiently high rank are identified in step 330 and transmitted to the person in step 340.

Fig. 3 shows how the "locate person" step 30 determines the person's location at regular time intervals. The duration of these intervals is a tunable parameter of the system and defaults to 60 seconds in the present invention. Per step 32, the position determining 1 unit polls GPS satellites, cell tower, or other source of location information. Any change in location is identified per step 34 and sent to the server per step 36. The position determining 1 then pauses for the remainder of the duration per step 38 and repeats the process.

Fig. 4 illustrates how the "locate events" step 60 determines the upcoming schedule of the person. The schedule files are retrieved per step 62 via the local file system or a communication network and stored locally in computer memory. The location of the files may be in either standard locations chosen by scheduling programs, or identified directly by the person via any standard technique such as a web page or a system configuration option. The schedule files, presumed to adhere to the Internet standard RFC 2445, are then parsed using the Net::iCal module per step 65 and separated in computer memory into distinct and possibly overlapping events. The earliest occurring event that has not already transpired or geocoded by the system is obtained per step 68. If there are no such events per step 71, locations corresponding to possibly found geocoded events are transmitted along with the results of the geocoding to the server per step 88, and the system waits for a fixed interval (defaulting to 60 seconds) per step 101 before repeating the process.

If an event is found in step 71, it is tokenized per step 74 by splitting up a string expressing the event into distinct words, each being a token, delineated by white space characters. Perfect tokenization is not necessary since the intent is not to identify semantic units, but merely to generate sequences of characters suitable for input to the geocoding routine in step 92.

A variable X is then set per step 77 to the number of tokens found in step 74 for the current event. If there are less than three tokens per step 80, no address can be found, and the system moves to the next event per step 68. If there are more than three tokens, attempts to find a geocodable address proceed. An internal pointer is set to the first token of the event, and the X tokens following the pointer are retrieved from the event per step 83. If the pointed token doesn't correspond to a token of a possible address, the token is removed from the sequence and the variable X is decremented by one per step 86 and step 80 is repeated with the new value of the variable X. If a sequence of tokens corresponding to an address is found per step 89, the token sequence is passed as a string to a geocoding utility per step 92. lf the geocoding utility finds a valid latitude/longitude pair for the token sequence per step 95, it is stored in memory per step 98. and control passes to step 68 for the next event.

If the geocoding utility does not find a valid latitude/longitude pair, the pointer is advanced by one, and control returns to step 83 so that the next X tokens can be tested for a valid address. This continues until the pointer reaches token number N - X + 2, where N is the total number of tokens in the event. At this point, no sequence will be found per step 89. X is then decremented by 1, and control passes to step 80.

The net effect of steps 77 through 95 is to ensure that any address in the event will be found; that longer and more complete addresses are found before shorter or incomplete addresses; and that if multiple addresses appear in the event, the address occurring first is the one geocoded. By examining the entire event and sequentially removing tokens from the end of the event, the longest and earliest event is guaranteed to be found.

The search for geocodable addresses proceeds for every event, Once all events have been searched per step 71, the events for which geocoded addresses are found are transmitted along with the results of the geocoding to the server per step 88, and as described above the system waits for a fixed interval per step 101 before again attempting to locate events in the event that the schedule files have been updated.

As shown in Figs. 5a through 5g, the events for which geocoded addresses exist are used to compute a probability map for the person. Fig. 5a shows the overall procedure for computing the probability map. If the events do not include times per step 121, a probability map is constructed using only the distances between the points per step 122 and detailed in Fig. 5b. If the events do include times, all times are converted to Greenwich Mean Time per step 150 using the latitude and longitude computed during the geocoding process and using an automated service for converting latitude and longitude to time zone such as http://www.csgnetwork.com/sunriseset.html. The probability map is then constructed per step 151 and detailed in Fig. 5c. The map resulting from step 122 or from step 150 is then stored in the server 3 per step 149.

Fig. 5b shows the procedure for computing a probability map in the absence of timestamps. Per step 123, a bounding box is first computed by iterating through all of the locations and finding the minimum and maximum latitude, and the minimum and maximum longitude. The; bounding box is then defined as a region spanning the rectangle defined by these four coordinates.

An initial radius R is set equal to the length of the diagonal of this rectangle per step 124. A score assigned to each location is set to zero. The locations in the rectangle are then placed in a queue per step 126; the precise ordering is unimportant. A counter C is set to zero per step 128, and the first location is extracted from the queue per step 130. Presuming there was still a location in the queue per step 132, all other locations occurring within distance R are ordered into a second queue per step 134. These are called neighbors. The first neighbor is removed from the second queue per step 136. Presuming such a neighbor exists, C is incremented by one per step 140, and the score for the location is increased by 1 divided by the squared distance from the location to the neighbor per step 142. This process of finding neighbors and increasing the score for the location continues until no neighbors remain in second queue, per step 138. At that time, steps 132 through 142 are repeated for the next location until no locations remain per step 132. At that time, C is tested to see whether it is equal to zero per step 144. If any neighbors were found for any location, C will be greater than zero, and R will be halved per step 146. Steps 126 through 144 are then repeated for this new, smaller radius. Eventually, the radius will decrease to a value at which no neighbors are found for any location. When this occurs, C will be zero per step 144, and the score for each location is normalized by dividing by the sum of all scores. The result is a probability for each location.

Fig. 5c shows the high-level procedure for computing a probability map when timestamps are present. Per step 152, the set of all chronologically consistent paths from event to event are computed, For each such path, a sequence of probabilities called a probability vector is computed per step 180 and illustrated in Fig. 5e. Each element of the probability vector corresponds to a location, and expresses the likelihood that the person will be at that location at its stated time given that the enclosing path is correct. Step 210, illustrated in Fig. 5f, computes the likelihood of each path, and step 240, illustrated in Fig. 5g, combines the results from steps 180 and 210 to calculate an overall probability for each event. Figs. 5d, 5e, 5f, and 5g explain these processes in more detail.

Fig. 5d shows the procedure for computing chronologically consistent paths per step 152. First, the locations are sorted into chronological order by any standard sorting routine and placed in a queue per step 155. A list variable P is then set to an empty list per step 158, and per step 161 a second list variable Q is set to the queue generated by step 155. At this point, a recursive function GENERATE is called with the two parameters P and Q per step 164.

The GENERATE function removes the first location from the second list variable Q per step 167. If that was the only location per step 170, GENERATE returns a list of two elements per step 176. The first element is a list of the locations in P, and the second element is a list of the locations in P with the removed location appended. If there was more than one location passed to GENERATE as the list Q, then per step 173 GENERATE returns a list of two elements. The first element of the list is the result of calling GENERATE with two parameters: P, and the newly shortened Q. The second element of the list is the result of calling GENERATE with two parameters: a new P that appends the location removed from Q, and the newly shortened Q. The result of the initial call to GENERATE is thus the set of all possible chronologically consistent paths.

Fig. 5e shows the procedure for computing probability vectors per step 180. First, the set of paths generated by step 152 is assigned to a list U, per step 182. The order of the paths in U is unimportant. ln step 184, the first path is removed from U and called V. Presuming the path V exists, per step 186, a second list L is set to all of the locations in V, per step 188. A scalar variable J is then set to zero, signaling a first location in the list L, per step 190, and the probability calculated in step 148 is assigned to that first location L[0] per step 192. That probability is stored per step 194 in a path data structure associated with the path V. The variable J is incremented by one per step 196. If location J exists per step 198, then the probability of that location is set to the probability of the previous location L[J-1] multiplied by a distance metric DIST per step 200. In the preferred embodiment, DIST(L[J-1], L[J]) is equal to the square of the difference between the times of the locations divided by the distance between the locations. In other words, DIST(L[J-1], L[J]) is the mulplicative inverse of the velocity squared. This corresponds to the common sense insight that the faster the person needs to move to get from one location to the next, the less likely it is that the motion occurs.

Steps 200, 194 and 196 are repeated until the end of the path is reached as detected per step 198. Then the process of steps 184-200 is repeated for the next path. When no paths remain, the V EXISTS? test will fail per step 186, and per step 202 control will pass to step 210 as shown in Fig. 5c. At this point all probability vectors have been computed and stored in the path data structures.

Fig. 5f shows the procedure for computing path probabilities per step 210. First, per step 212, a list variable U is defined as the set of all paths from step 152 together with the probability vectors calculated in step 180. Then a scalar variable K, used for iterating through the paths in U, and a scalar variable S are set to zero per step 214. L is then set to the final chronological location in path number K per step 216, and the scalar variable S is incremented by the probability of that location in that path per step 218. That probability was previously calculated in step 180. Next, K is incremented by one per step 220. Presuming any paths remain in U, the path U[K] will exist per step 222, and steps 216 through 222 will repeat. When no paths remain in U, S will contain the sum of all the probabilities of final locations in all paths, and control will pass from step 222 to step 224.

Once the sums of all probabilities of final locations has been calculated, a scalar variable M. used for iterating through the paths in U, is set to zero per step 224. L is set to the last location in path U[M] per step 226, and in step 228 the probability for the overall path U[M] is defined as the probability of the last location in the path divided by S, previously calculated and stored during steps 216 through 222. The overall path probability is stored in U per step 230. M is then incremented by one per step 232, and the process of steps 226 through 232 is repeated until no paths remain, per step 234. Per step 236, control then passes back to step 240.

Fig. 5g shows the procedure for computing overall location probabilities per step 240. Per step 242, U is defined to be the set of all paths generated in step 152 and augmented in steps 180 and 210. A scalar variable H, used for iterating through the paths in U, is set to zero per step 244. In step 246. L[J] is set to the first location in U[H], and a path-independent probability of location from L, initially set at zero, is incremented by the probability PROB(L[J]) of location L[J] in path U[H] calculated in step 180 multiplied by the overall path probability of U[H] calculated in step 210.

The location is then advanced to the next location L[J+1] in U[H] per step 250. Per step-252, steps 248 and 250 are repeated until no locations remain in path U[H]. H is then incremented by one per step 254, and in step 256 presuming path U[H] exists, steps 246 through 254 are repeated. When no paths remain, then the path-independent probabilities for every location will have been computed, and the procedure finishes per step 258.

As shown in Fig. 6, the "retrieve forecasts" step 270 uses the external weather forecasting service to obtain weather forecasts for the event locations. Initially, the list variable Z is defined to be the set of all locations. per step 272. L1 is then set to the user's current location, and L2 is set to the first location in the schedule per step 274, and the latitude and longitude of L1 and L2 are extracted from the location data structure Z per step 276. The order of the locations does not matter; in the present invention, they are ordered by the sequence provided by the schedule determining unit 2.

If the location data structures contain timestamps per step 278, they are extracted from L1 and L2 per step 280. If the locations L1 and L2 are more than a minimum distance apart (0.25 miles by default) per step 282 weather forecasts for the locations in between may be desired even though they do not correspond to specific events in the person's schedule. These locations are generated in step 284 at equally spaced intervals between L1 and L2. If timestamps were found in step 278, they are used to generate timestamps for the intermediate locations, using an equally spaced interval beginning with the starting time of L1 and ending with the finishing time of L2.

The weather service, which is presumed to be available over a communications network (not shown) or resides locally on the server, is sent requests for L1,L2, and any intermediate locations generated per step 286. If the locations L1 and L2 are less than or equal to the minimum distance apart as detected per step 282, step 284 is shunted for activation of step 286. If timestamps were extracted in step 278, they are passed to the weather service as well, to improve the precision of the forecasts. The results of the request are retrieved and stored locally per step 288. lf L2 is the last location as detected by stop 290, the operation completes per step 294. lf L2 is not the last location, L1 is set to L2, L2 is set to the next location per step 292, and steps 276 through 290 repeat. In this way, forecasts are generated for every contiguous pair of locations.

As shown in Fig. 7, the forecasts are ranked in order of importance. Four factors contribute to the importance of a forecast at a given location: the change in the weather, the inclemency of the weather, the likelihood of the forecast accuracy, and the probability of the person being present at the location. In step 302, a clemency C is computed for the current location of the person. The clemency function CLEM returns a number between 0 and 1 expressing the weather conditions, with 0 indicating ideal conditions (eg. sunny, no clouds, 24 degrees Celsius) and 1 indicating weather conditions of a nature that mandates evacuation of the affected area. There are many ways to define CLEM, and the present invention does not impose any constraints on its definition. Some uses (e.g., for irrigation or warfare) might use a clemency function very different from conventionally agreed-upon ideals of desirable weather.

The variable L is then set to the first location per step 304, and its clemency CLEM(L) computed using the weather forecast gathered in step 270, per step 306. The order of the locations does not matter, since the importance is calculated for all of them; "first location" is merely a way of indicating the initial choice of location, whatever it might be In the present invention, the locations are chosen in the order provided by the schedule determining unit, but this is a matter of convenience only. Per step 308, a weighted clemency W(L) is computed by multiplying the clemency CLEM(L) by the probability provided by the weather forecast in step 270 if it exists, and one otherwise.

A distance metric CLEMDIST is used to calculate the disparity in weather conditions between CLEM(L) and C, per step 310. Many different choices are possible for CLEMDIST. The present invention uses one plus the square of the difference between CLEM(L) and C, yielding a number between one and two.

Per step 312, the importance of the forecast for location L is then calculated as the product of the probability that the person visits the location (calculated in step 120) multiplied by the difference in weather conditions as defined by CLEMDIST(CLEM(L), C) multiplied by the weighted clemency of location L. This importance value is then stored in the location data structure per step 314. If L was not the last location per step 316, L is set to the next location per step 318 and steps 306 through 316 are repeated for the new L. If L was the last location per step 316, the locations are sorted in order of decreasing importance using a standard sorting method per step 320. The procedure is now done per step 322. as the forecasts are ready for transmission.

Returning to Fig. 2, the ranked forecasts are then compared to a threshold (defaulting to 0.37) in step 330. Any forecasts exceeding that threshold are transmitted to the person per step 340, using an appropriate means of notification such as pager, electronic mail, or mobile phone short message service.

Although a preferred embodiment of the present invention has been described above in detail, various modifications thereto will be readily apparent to anyone with ordinary skill in the art. For example, the present invention may be implemented either in hardware or software, or a combination of both. Also, the messages may be translated into other languages, expressed in a multitude of forms, and transcoded to other media such as speech, images, or video. Further, the locations for which forecasts are obtained may come from sources other than a calendar or schedule application.

## Claims

1. A method for delivering personalized weather forecasts to a person, comprising:
obtaining information about a current location of the person;
obtaining information about likely future locations of the person;
obtaining weather forecasts corresponding to those locations;
ranking weather forecasts for delivery according to their importance
to the person; and
delivering the forecasts to the person.

2. The method of claim 1, wherein the current location of the user is automatically determined by a position determining unit.

3. The method of claim 1 or 2, wherein likely future locations are automatically obtained from a schedule.

4. The method of claim 1, 2 or 3, wherein the weather forecasts are retrieved automatically.

5. The method of anyone of claims 1 to 4, wherein the weather forecasts are determined at periodic time intervals.

6. The method of claim 5, wherein the weather forecasts are determined for intermediate positions between fixed locations.

7. The method of anyone of claim 1 to 6, wherein weather forecasts are selected for transmission based on a calculated importance of the forecast.

8. A method for processing information pertaining to the schedule of a person, comprising:
retrieving the schedule files from a server;
parsing and tokenizing the schedule files;
finding addresses within the events;
geocoding the addresses.

9. The method of claim 8, wherein the schedule files are parsed using Internet standard 2445.

10. The method of claim 8 or 9, wherein the success or failure of a geocoding service is used to determine whether a string constitutes a valid address.

11. An apparatus for delivering personalized weather forecasts to a person, comprising:
- a first means for obtaining information about a current location of the person;
- a second means for obtaining information about likely future locations of the person;
- a third means for obtaining weather forecasts corresponding to those locations;
- means for ranking weather forecasts for delivery according to their importance to the person; and
- means for delivering the forecasts to the person.

12. The apparatus of claim 11, wherein the current location of the user is automatically determined by a position determining unit.

13. The apparatus of claim 11 or 12, wherein likely future locations are automatically obtained from a schedule.

14. The apparatus of claim 11, 12 or 13, wherein the weather forecasts are retrieved automatically and/or at periodic time intervals.

15. A method for estimating probabilities of a person's arrival at specific locations, comprising:
computing chronologically consistent paths;
obtaining probability vectors each assigned to a consistent path;
obtaining overall path probabilities; and
deducing location probabilities from probability vectors and overall path probabilities.

16. The method of claim 15, wherein a recursive function is used to build up a set of chronological paths from a list of chronological locations.

17. The method of claim 15 or 16, wherein the probability vectors are obtained by cascading successive probabilities from one location to the next.

18. The method of claim 15, 16 or 17 wherein the location probabilities are obtained by weighting locations by the probability of each path they occur in.

19. A method for ranking an importance of weather forecasts for a person, comprising:
measuring the clemency of the weather forecast;
quantifying a change in weather between locations; and
integrating a probability of the person's arrival at the location.

20. The method of claim 19, wherein the clemency is calculated according to configurable parameters.

21. The method of claim 19 or 20, wherein the change in weather between locations is calculated according to a configurable distance metric.

22. The method of claim 19, 20 or 21 wherein the importance is calculated as a function of thc probability of the person's arrival at the location, the change in weather from the current location, and the likelihood-weigbted clemency of the forecast.
